# EUROPÄISCHE PATENTSCHRIFT

(11) **EP 1 473 180 B1**
(45) Veröffentlichungstag und Bekanntmachung des Hinweises auf die Patenterteilung: **17.09.2008**
(21) Anmeldenummer: 04010026.5
(22) Anmeldetag: 28.04.2004
(51) Int. Cl.: B60J 7/12, B60J 7/185

(54) **Cabriolet-Fahrzeug**
Convertible vehicle
Véhicule cabriolet

(30) Priorität: 29.04.2003 DE 20306583 U
(43) Veröffentlichungstag der Anmeldung: 03.11.2004
(73) Patentinhaber: Wilhelm Karmann GmbH, 49084 Osnabrück (DE)
(72) Erfinder: Hoge, Stefan, 49143 Bissendorf (DE); Bunsmann, Winfried, 49143 Bissendorf (DE); Beichelt, Christoph, 49074 Osnabrück (DE)

(56) Entgegenhaltungen:
- EP-A2- 1 057 671
- US-A- 5 884 964
- US-B1- 6 431 633

## Beschreibung

Die Erfindung betrifft ein Cabriolet-Fahrzeug mit einem zur mittelbaren Verbindung mit einem Windschutzscheibenrahmen vorgesehenen und in sich starren vorderen Dachende nach dem Oberbegriff des Anspruchs 1.

Es ist bekannt, einen Dachbezug an einem starren, die Breite des Daches in diesem Bereich einnehmenden vorderen Dachende festzulegen. Das vordere Dachende trägt Befestigungsbeschläge und übernimmt somit seinerseits die Funktion der Dachverriegelung am Windschutzscheibenrahmen. Dabei muß das vordere Dachende, um eine hinreichende Sicherheit dieser Verriegelung und eine Spannung des geschlossenen Dachbezuges zu gewährleisten, eine große Stabilität und Verwindungssteifigkeit aufweisen. Andererseits ist ein möglichst geringes Gewicht des Dachendes erwünscht, um die Antriebsmechanik für das Dach möglichst raumsparend und leicht ausbilden zu können. Hier kommt gerade der Dachspitze eine hohe Bedeutung zu, da diese denjenigen Dachbereich darstellt, der von einer Schwenkachse für das Dach am weitesten entfernt liegt. Somit beeinflußt das vordere Dachende das für ein Öffnen und Schließen zu überwindende Trägheitsmoment maßgeblich.

Die Patentschrift US 5,884,964 zeigt ein gattungsgemäßes Dachende.

Zur Gewährleistung der gewünschten Stabilität ist bekannt, einen quer zum Fahrzeug verlaufenden Träger vorzusehen, der als LeichtmetallStrangpreßprofil ausgebildet ist. Dieser ist jedoch über seinen gesamten Längsverlauf, der in Einbaustellung quer zum Fahrzeug liegt, gleichartig ausgebildet und weist daher wenig Flexibilität für die Anmontage weiterer Funktionsteile und wenig Anpassungsmöglichkeiten an individuelle Fahrzeugerfordernisse auf. Ein derartiges Profil muß schmal sein, um zur Anpassung an den Verlauf des Windschutzscheibenrahmens noch durch Biegen umformbar zu sein. Andererseits steht dieses Erfordernis der im Betrieb geforderten Biegefestigkeit entgegen. Beim Anschweißen von Längsrahmenteilen an die Dachspitze besteht zudem die Gefahr eines Wärmeverzugs, was die Einhaltung von Toleranzen bei der Fertigung erschwert.

Der Erfindung liegt das Problem zugrunde, ein vorderes Dachende eines Cabriolet-Fahrzeugs zu verbessern.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 9 verwiesen.

Durch die erfindungsgemäße Ausbildung kann ein vorderes Dachende geschaffen werden, daß eine sehr hohe Biegefestigkeit aufweist. Es kann eine große Dicke, etwa typisch von zehn Millimetern, und dennoch aufgrund der leichten Schaumstruktur ein sehr geringes Gewicht aufweisen. Da das Bauteil in einer zumindest einseitig der Endkontur entsprechenden Form aufgeschäumt werden kann, ist ein Biegen des Bauteils nach dem Schäumen nicht zwingend erforderlich, allerdings möglich.

Eine Anpassung an aerodynamische Erfordernisse kann vorteilhaft durch ein Pressen des Bauteils nach dem Schäumen erreicht werden, etwa um eine konisch zulaufende Formgebung in Fahrtrichtung zu erreichen, so daß unmittelbar am Windschutzscheibenrahmen nur eine geringe Bauteildicke und in dem Bereich, in dem die Befestigungsbeschläge montiert sind, eine größere Dicke erreicht wird.

Die Stabilität des Bauteils wird vorteilhaft durch eine erhebliche in Fahrtrichtung erstreckte Breite unterstützt, die aufgrund des geringen Gewichts der Schaumstruktur ermöglicht wird, ohne daß die Antriebe für das Verschwenken des Dachs dadurch größer ausgelegt werden müßten.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine perspektivische Gesamtansicht eines erfindungsgemäßen Cabriolet-Fahrzeugs mit geschlossenem Dach und der besseren Übersicht halber nur auf einer Fahrzeuglängshälfte eingezeichnetem Dachbezug,
- Fig. 2: eine schematische, perspektivische Einzelteilansicht eines vorderen Dachendes mit einem Querträger und seitlichen Längsrahmenteilen,
- Fig. 3: eine Schnittansicht in Längsmitte eines vorderen Dachendes, etwa entsprechend der Linie III-III in Fig. 2, jedoch in an das Dach montierter und vollständig ausgestatteter Einbaulage,
- Fig. 4: eine ähnliche Schnittansicht wie Fig. 3 mit einem über eine Klammer in das vordere Dachende eingeklipsten Antriebsteil,
- Fig. 5: einen Schnitt entlang der Linie V-V in Fig. 3,
- Fig. 6: eine ähnliche Ansicht wie Fig. 2 einer alternativen Dachspitze.

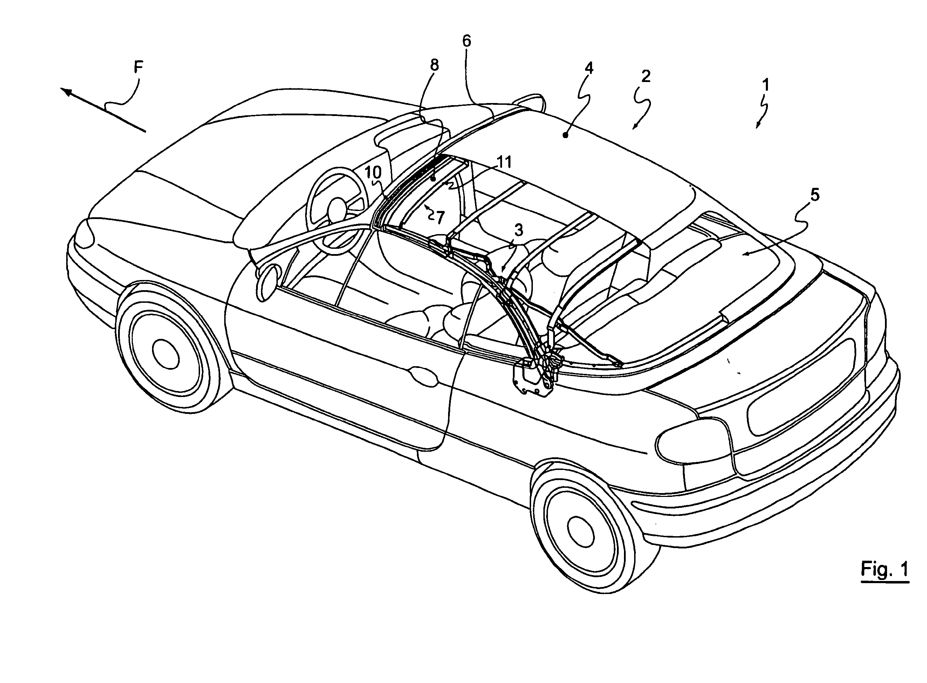

Das in Figur 1 dargestellte Cabriolet-Fahrzeug 1 umfaßt ein bewegliches Dach 2, das einen über ein Gestänge 3 gespannten Bezug 4 aufweist, in den eine Heckscheibe 5 integriert ist. Alternativ wäre auch möglich, daß das Dach 2 nur in seinem in Fahrtrichtung F vorderen Bereich einen flexiblen Bezug aufweist und im hinteren Bereich etwa starre Dachteile oder ein verbleibender fester Dachteil nach Art eines Targa-Fahrzeugs vorhanden ist oder sind.

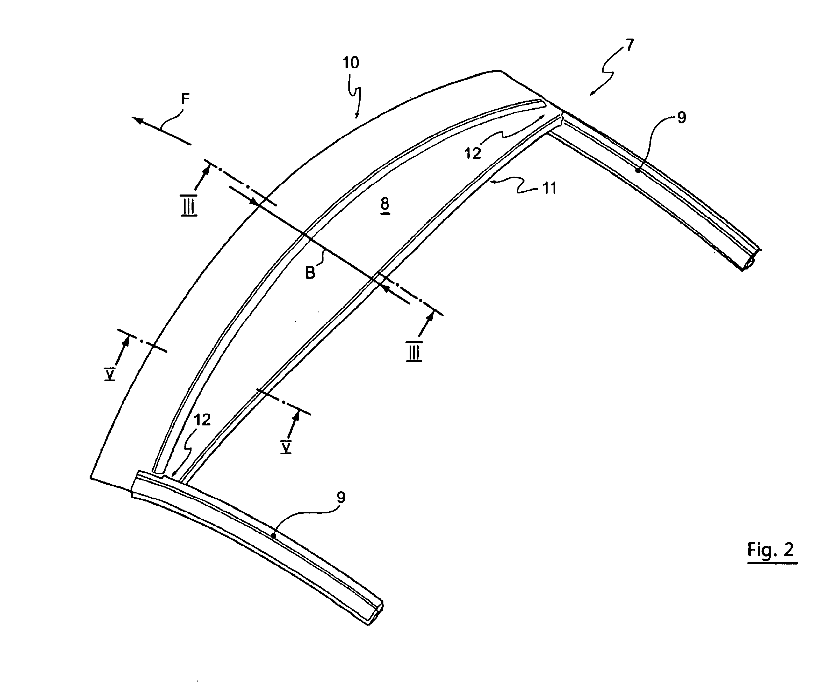

Das Dach 2 ist in geschlossener Stellung (Fig. 1) an einem Windschutzscheibenrahmen 6 verriegelt, wodurch der Bezug 4 gespannt und das Gestänge 3 in seiner Schließstellung gehalten oder unterstützt ist. Zur Verbindung mit dem Windschutzscheibenrahmen 6 ist als Teil des Gestänges 3 ein in sich starres vorderes Dachende 7 ausgebildet, das häufig auch als Dachspitze bezeichnet wird. Dieses kann vom Bezug 4 übergriffen und somit von außen nicht sichtbar sein. Die Dachspitze 7 umfaßt einen Träger 8 (Fig. 2), der in Einbaustellung sich quer zum Fahrzeug 1 über die Breite des Daches 2 in seinem vorderen Bereich erstreckt, und seitliche, längs zum Fahrzeug verlaufende Rahmenteile 9. Diese bilden zusammen mit dem Träger 8 eine starre Baueinheit aus. Der Bezug 4 ist hier um die vordere Spitze des Trägers 8 umgeschlagen und über beispielsweise eine Schraub- oder Klemmbefestigung 21 an dessen Unterseite festgelegt.

Zumindest der Träger 8 umfaßt eine aufgeschäumte metallische Schicht, insbesondere eine Aluminiumschaumschicht. Es können auch mehrere derartige Schaumschichten übereinander in dem Träger 8 vorliegen. Um eine glatte und exakt maßhaltige Ober- und/oder Unterfläche zu erreichen, kann der Träger 8 ober- und/oder unterhalb der Schaumschicht eine massivmetallische Schicht aufweisen. Sofern ein Außenbezug 4 und/oder ein Innenhimmel 22 den Träger 8 über- und/oder untergreifen, muß dies nicht unbedingt erforderlich sein. Bei Verwendung von massivmetallischen Deckschichten sind diese über metallische Bindungen mit der aufgeschäumten Schicht verbunden.

Die aufgeschäumte Lage kann beispielsweise gebildet sein aus einer Pulvermischung aus einem oder mehreren metallischen Pulvern, beispielsweise einer Aluminium-Silizium-Legierung, etwa AlSi7 oder AlSi12, oder einer Aluminium-Silizium-Kupfer-Legierung, etwa AlSi6Cu4, einerseits, und einem oder mehreren gasabspaltenden Treibmitteln andererseits, beispielsweise Titanhydrid. Die Pulverbestandteile werden miteinander vermischt, und die so gebildete Pulverlage kann etwa über ein Strangpreßverfahren zwischen zwei Walzen oder über ein Impulsverdichten oder anderes eindimensionales Verdichten lotrecht zur Erstreckung der Pulverlage allein oder mit einer oder mehreren massivmetallischen Deckschichten zu einem aufschäumbaren Halbzeug verdichtet werden. Dieses ist parallelwandig und weist über seinen gesamten Verlauf eine konstante Dicke auf. Sofern nach dem Aufschäumen noch eine Verformung stattfinden soll und auch für ein geringes Gesamtgewicht, sollten die massivmetallischen Deckschichten hinreichend dünn sein. Bei einer Dicke des aufgeschäumten Bauteils von etwa zehn Millimetern weisen die Deckschichten typisch jeweils eine Dicke von etwa einem Millimeter auf. Sie sollten in jedem Fall möglichst nicht mehr als jeweils etwa 15% der Gesamtbauteildicke einnehmen.

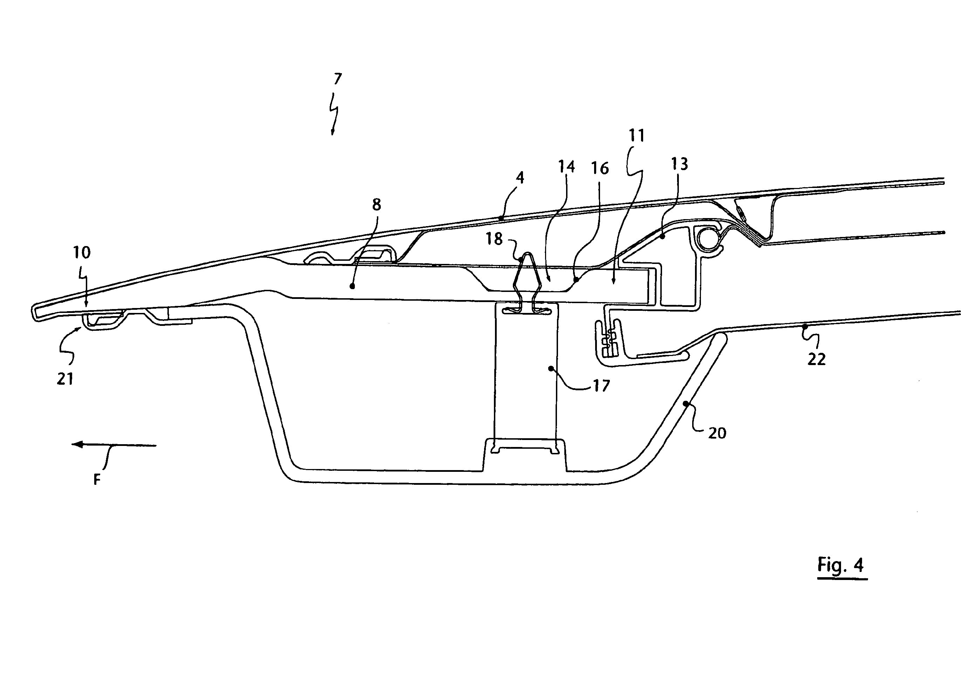

Sowohl vor als auch nach dem Aufschäumen kann eine Umformung stattfinden. Nach dem Aufschäumen wird hier eine konische Pressung des gebildeten Halbzeugs vorgenommen, um eine Verdünnung des vorderen Endes 10 gegenüber dem hinterem Ende 11 des Trägers 8 zu erreichen (Fig. 4 ff.). Auch kann eine Biegung des gesamten Trägers 8 sowohl vor als auch nach dem Umschäumen mit geringen Umformwinkeln durchgeführt werden.

Bei der Pressung nach dem Umformen ist zu beachten, daß die formgebenden Teile des Preßwerkzeugs keinen zu engen Mindestradius aufweisen, da ansonsten ein signifikanter Anteil von Zellstegen der gebildeten metallischen Schaumblasen reißt.

Die Umformung nach dem Aufschäumen kann besonders kostengünstig als Kaltumformung durchgeführt werden. Auch eine Warmumformung ist möglich. Ein hoher Kupferanteil in der Ausgangsmischung sichert eine gute Duktilität der gebildeten Schaumschicht.

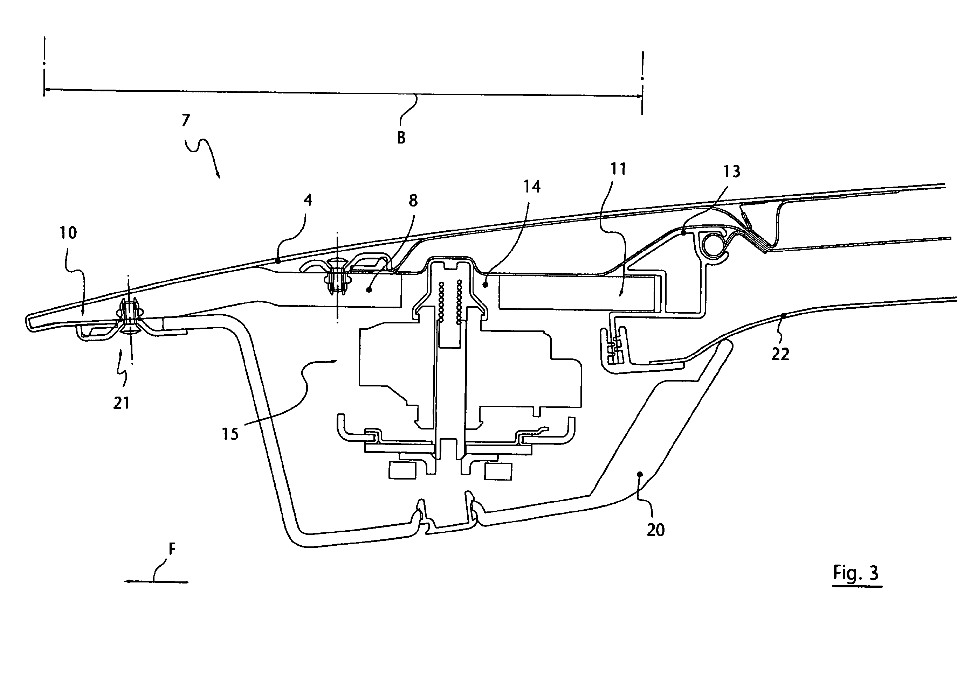

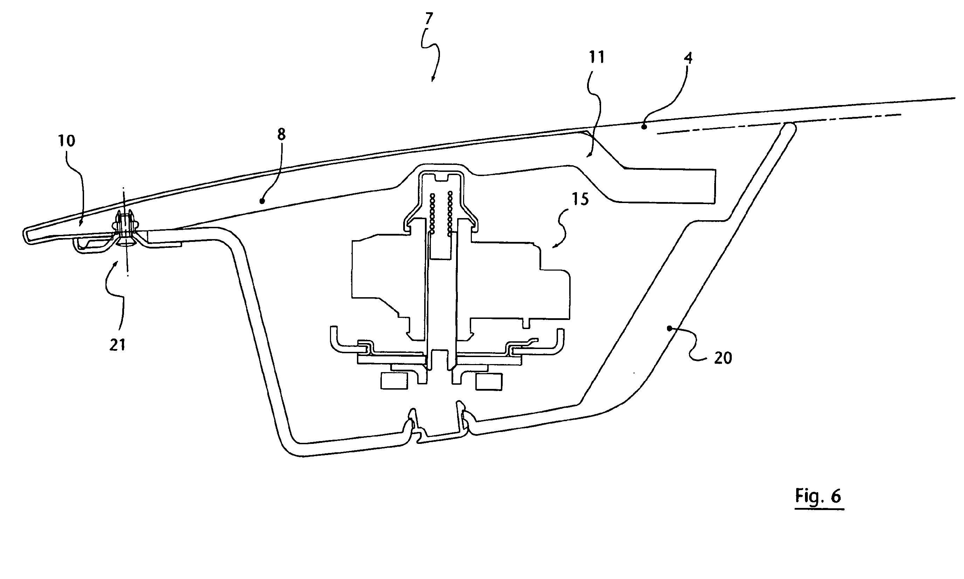

Im Ausführungsbeispiel hat der Träger 8 vor dem Aufschäumen seine insgesamt gewölbte Form erhalten und muß daher im aufgeschäumten Zustand nicht mehr insgesamt gebogen werden. Er kann in Fahrtrichtung F eine erhebliche Breite B von typisch 15-20 Zentimetern und mehr aufweisen. Somit ist eine erhebliche Auflagefläche für den Bezug 4 gebildet. Der ansonsten erforderliche nachfolgende erste Spriegel kann dadurch entbehrlich werden (Fig. 6). Ebenso ist es möglich, wie in den Figuren 3 bis 5 gezeigt, einen quer verlaufenden Spriegel 13 unmittelbar an dem Träger 8 anzumontieren, etwa durch Schweißen oder Kleben zu befestigen. Der Spriegel 13 ist im Ausführungsbeispiel durch ein herkömmliches Leichtmetallprofil gebildet. Er könnte auch eine aufgeschäumte metallische Lage umfassen und auch einstückig mit dem Träger 8 ausgebildet sein.

Neben der Pressung, mit der das vordere Ende 10 gegenüber dem hinteren Ende 11 verdünnt wird, ist nach dem Aufschäumen noch das Verdünnen von Randbereichen 12 durch Pressung möglich, um Flansche zum Anschweißen der Längsrahmenteile 9 zu bilden. Ebenso können Bohrungen und Ausstanzungen angelegt und auch deren Randbereiche etwa verpreßt werden. Auch ein randseitiges Sägen oder ein Aussägen von Strukturen ist möglich.

In Fig. 3 ist eine zentrale Bohrung 14 angelegt, um darin ein Betätigungselement 15 zum Lösen der Verriegelungsorgane aufzunehmen.

In Fig. 4 ist die Zentralbohrung 14 in einem insgesamt durch Pressen verdünnten Bereich 16 angelegt worden. Dadurch kann ein dort beispielhaft eingezeichnetes elektrisches Organ 17 in der Bohrung 14 über eine Klipsverbindung 18 befestigt werden.

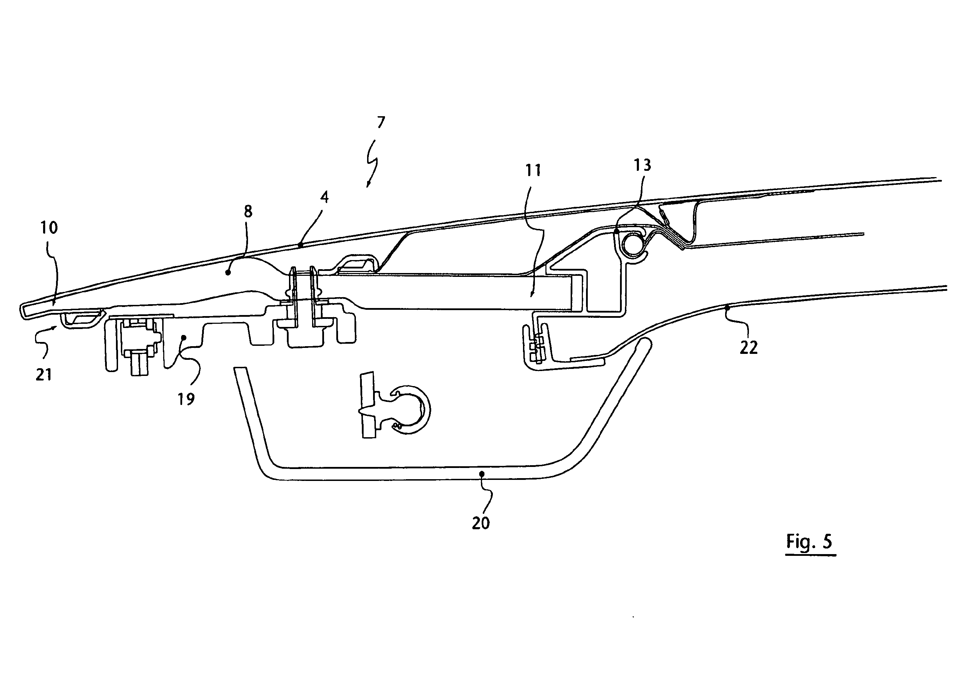

In Fig. 5 ist ein Schnitt im Randbereich des Trägers 8 gezeigt. Dort können beispielsweise symmetrisch zu einer vertikalen Fahrzeuglängsmittelebene Verriegelungsorgane 19 an den Träger 8 anmontiert sein.

Die in Fig. 6 dargestellte Alternativausbildung des Trägers 8 zeigt diesen so ausgeformt, daß er entgegen der Fahrtrichtung F einen recht starken Anstieg aufweist und aufgrund seiner dadurch vermittelten Unterstützung für den Bezug 4 den Spriegel 13 entbehrlich macht. Auch hier ist wieder ein manueller Antrieb 15 für die Betätigung der Verriegelungsorgane 19 vorgesehen.

In allen gezeigten Varianten kann der Träger 8 von einer Verkleidung 20 untergriffen sein. Diese braucht aufgrund der Stabilität der geschäumten Dachspitze 7 keine Tragfunktion zu erfüllen und kann daher beispielweise aus leichtem Kunststoff bestehen. Auch eine elastische Verformbarkeit dieser Verkleidung 20 kann für den Crashfall vorgesehen sein. Zudem kann die Verkleidung 20 Befestigungsansätze für einen sog. Innenhimmel 22 untergreifen und diese dadurch von der Sichtbarkeit abschirmen.

Ebenso kann die Verkleidung 20 an Material und Farbe des Innenraums angepaßt sein. Auch kann - hier nicht gezeichnet - der Träger 8 eine weiter abgestufte Gestalt haben und Verriegelungsorgane 19 sowie einen Antrieb 15, 17 untergreifen.

## Patentansprüche

1. Cabriolet-Fahrzeug (1) mit einem Dach (2), das zumindest in seinem vorderen Bereich einen flexiblen Bezug (4) aufweist, der ein dort die Breite des Daches (2) einnehmendes und in sich starres vorderes Dachende (7) übergreift, das bei geschlossenem Dach (2) in Verbindung mit einem Windschutzscheibenrahmen (6) steht, wobei
das vordere Dachende (7) einen im Wesentlichen quer verlaufenden Träger (8) umfasst, **dadurch gekennzeichnet, dass** der Träger seinerseits zumindest eine aufgeschäumte metallische Schicht umfasst.

2. Cabriolet-Fahrzeug nach Anspruch 1,
**dadurch gekennzeichnet,**
**daß** der Träger (8) eine konisch zulaufende Form (10;11) mit einer in Fahrtrichtung (F) abnehmenden Dicke aufweist.

3. Cabriolet-Fahrzeug nach einem der Ansprüche 1 oder 2,
**dadurch gekennzeichnet,**
**daß** der Träger (8) nach Aufschäumen der metallischen Schaumschicht gepreßt worden ist.

4. Cabriolet-Fahrzeug nach einem der Ansprüche 1 bis 3,
**dadurch gekennzeichnet,**
**daß** der Träger (8) nach Aufschäumen der metallischen Schaumschicht gebogen worden ist.

5. Cabriolet-Fahrzeug nach einem der Ansprüche 1 bis 4,
**dadurch gekennzeichnet,**
**daß** das vordere Dachende (7) einen hinter dem Träger (8) angeordneten Spriegel (13) umfaßt, der ebenfalls zumindest eine aufgeschäumte metallische Schicht aufweist.

6. Cabriolet-Fahrzeug nach einem der Ansprüche 1 bis 5,
**dadurch gekennzeichnet,**
**daß** der Träger (8) und der Spriegel (13) unmittelbar aneinander angrenzen.

7. Cabriolet-Fahrzeug nach einem der Ansprüche 1 bis 6,
**dadurch gekennzeichnet,**
**daß** der Träger (8) in Fahrtrichtung (F) eine Breitenerstreckung (B) von zumindest zehn Zentimetern aufweist.

8. Cabriolet-Fahrzeug nach einem der Ansprüche 1 bis 7,
**dadurch gekennzeichnet,**
**daß** der Träger (8) zwei zueinander parallele massivmetallische Deckschichten aufweist, zwischen denen eine aufgeschäumte Schicht gelegen ist, wobei die massivmetallischen Deckschichten jeweils weniger als 15 % der Bauteildicke einnehmen.

9. Cabriolet-Fahrzeug nach einem der Ansprüche 1 bis 8,
**dadurch gekennzeichnet,**
**daß** der Träger (8) mit Bohrungen (14) zur Anmontage zumindest eines Antriebs (15;17) für die Ver- oder Entriegelung des Daches (2) am Windschutzscheibenrahmen (6) versehen ist.

## Claims

1. A cabriolet vehicle (1) with a roof (2), which has, at least in its front area, a flexible covering (4) which overlaps a front roof end (7) which takes up the breadth of the roof (2) there, is rigid per se and which, when the roof (2) is closed, is connected to a windscreen frame (6) wherein the front roof end (7) includes a substantially transversely-running support (8), **characterised in that** the support for its part includes at least one foamed metal layer.

2. The cabriolet vehicle according to Claim 1,
**characterised in that**
the support (8) has a tapered shape (10; 11) with a thickness which decreases in the direction of travel (F).

3. The cabriolet vehicle according to one of Claims 1 or 2,
**characterised in that**
the support (8) has been compression-moulded after foaming of the metal foam layer.

4. The cabriolet vehicle according to one of Claims 1 to 3,
**characterised in that**
the support (8) has been curved after foaming of the metal foam layer.

5. The cabriolet vehicle according to one of Claims 1 to 4,
**characterised in that**
the front roof end (7) includes a bow (13) which is arranged behind the support (8) and which also has at least one foamed metallic layer.

6. The cabriolet vehicle according to one of Claims 1 to 5,
**characterised in that**
the support (8) and the bow (13) directly abut one another.

7. The cabriolet vehicle according to one of Claims 1 to 6,
**characterised in that**
the support (8) has, in the direction of travel (F), a breadth extension (B) of at least ten centimetres.

8. The cabriolet vehicle according to one of Claims 1 to 7,
**characterised in that**
the support (8) has two solid metal top layers which are parallel to one another and between which there is situated a foamed layer, wherein the solid metal top layers each take up
less than 15% of the thickness of the component.

9. The cabriolet vehicle according to one of Claims 1 to 8,
**characterised in that**
the support (8) is provided with bores (14) for the mounting of at least one gear (15; 17) for the locking or releasing of the roof (2) at the windscreen frame (6).

## Revendications

1. Véhicule cabriolet (1) avec un toit (2) comprenant au moins dans son secteur avant un revêtement souple (4), lequel recouvre une extrémité de toit avant (7) occupant à cet endroit la largeur du toit (2) et rigide en soi, laquelle extrémité est en relation avec un cadre de pare-brise (6) lorsque le toit (2) est fermé, l'extrémité de toit avant (7) comprenant un support (8) s'étendant substantiellement transversalement,
**caractérisé en ce que**
le support comprend lui-même au moins une couche métallique expansée.

2. Véhicule cabriolet conformément à la revendication 1,
**caractérisé en ce que**
le support (8) présente une forme se terminant en cône (10; 11) avec une épaisseur décroissante dans le sens de la conduite (F).

3. Véhicule cabriolet conformément à l'une des
revendications 1 ou 2,
**caractérisé en ce que**
le support (8) a été comprimé après l'expansion de la couche métallique.

4. Véhicule cabriolet conformément à l'une des revendications 1 à 3,
**caractérisé en ce que**,
après l'expansion de la couche de mousse métallique, le support (8) a été fléchi.

5. Véhicule cabriolet conformément à l'une des revendications 1 à 4,
**caractérisé en ce que**
l'extrémité avant du toit (7) comprend un arceau (13) disposé derrière le support (8), lequel présente également au moins une couche métallique expansée.

6. Véhicule cabriolet conformément à l'une des revendications 1 à 5,
**caractérisé en ce que**
le support (8) et l'arceau (13) sont directement attenants.

7. Véhicule cabriolet conformément à l'une des revendications 1 à 6,
**caractérisé en ce que**,
dans le sens de la conduite (F), le support (8) s'étend sur une largeur (B) d'au moins dix centimètres.

8. Véhicule cabriolet conformément à l'une des revendications 1 à 7,
**caractérisé en ce que**
le support (8) présente deux couches de recouvrement en métal massif parallèles l'une par rapport à l'autre, entre lesquelles se trouve une couche expansée, les couches de recouvrement en métal massif occupant respectivement moins de 15 % de l'épaisseur de la pièce de construction.

9. Véhicule cabriolet conformément à l'une des revendications 1 à 8,
**caractérisé en ce que**
le support (8) est pourvu de trous (14) pour la mise en place d'au moins un entraînement (15; 17) pour le déverrouillage ou le verrouillage du toit (2) sur le cadre de pare-brise (6).
